# EUROPEAN PATENT APPLICATION

(11) **EP 1 534 026 A2**
(43) Date of publication of application: **25.05.2005**
(21) Application number: 04256859.2
(22) Date of filing: 05.11.2004
(51) Int. Cl.: H04Q 7/24

(54) **Interoperability of a proprietary enterprise communication network with a cellular communication network**

(30) Priority: 24.11.2003 US 720928
(71) Applicant: LUCENT TECHNOLOGIES INC., Murray Hill, New Jersey 07974-0636 (US)
(72) Inventor: Bushnell, William J., St. Charles, Illinois 60174 (US); Chung-Zin Liu, Naperville, Illinois 60565 (US)
(74) Representative: Watts, Christopher Malcolm Kelway, Dr.

(57) **Abstract**

The present interoperability system serves to pass presence and supervision information relating to a user's wireless station set between a cellular communication network and an enterprise communication network, which typically includes a Private Branch Exchange system. The interoperability system functions to extend the wireless Private Branch Exchange services provided in the enterprise communication network to the cellular communication network based on the presence and supervision data provided by the interoperability system. The provision of ubiquitous service to the user, regardless of their location provides a significant advantage over existing Private Branch Exchange and cellular communication network services. In addition, the user is equipped with only one wireless station set, which can operate as a cordless Private Branch Exchange extension in the office or as a standard wireless station set outside of the office.

## Description

### Field of the Invention

This invention relates to proprietary communication networks and their interconnection with the Public Switched Telephone Network and existing cellular communication networks.

### Problem

It is a problem in enterprise communication networks that these networks are disjunct from the existing cellular communication networks. Therefore, to obtain service in both networks, the users who are served by the enterprise communication network must be equipped with two wireless station sets, each with their own unique telephone numbers, with each number defining the user's presence in the corresponding network.

Enterprise communication networks consist of proprietary voice and data networks used to serve a predetermined set of users who are typically employed by a single entity. A Private Branch Exchange is typically used to provide voice-based services to these users and associated Wire-line or Wireless Local Area Networks are used for data connectivity. In this environment, the user is equipped with a wireless station set (or handset) that is assigned a unique telephone number, which is served by the Private Branch Exchange. Connections to the Public Switched Telephone Network for voice calls are via the Private Branch Exchange, while data connectivity to an IP Network is accomplished via a gateway, equipped with a firewall.

The existing cellular communication network consists of a plurality of Mobile Switching Centers, each of which serves one or more base station subsystems that provide the radio frequency links to the plurality of wireless station sets that are operational in each call coverage area (termed cell) provided by the associated base station subsystem. One Mobile Switching Center is typically termed the user's home Mobile Switching Center and it maintains the users identification, authentication and call services definition data in an associated Home Location Register which works in coordination with the ANSI-41 or GSM MAP Network. Other Mobile Switching Centers maintain their own Home Location Registers and also include Visited Location Registers to store call authorization data for users who roam out of their home service area to the call coverage area of the visited Mobile Switching Centers. In this environment, the user is equipped with a wireless station set that is assigned a unique telephone number, and calls are processed by the Mobile Switching Center which serves the present location of the user. Both voice and data connectivity in the existing cellular communication network is through the serving Mobile Switching Center to the Public Switched Telephone Network and to an IP Network, respectively.

Thus, the user is provided with two different wireless station sets, one for each network, and associated different telephone numbers. Since the two networks are not interoperated together, all incoming calls are routed solely on the dialed number, not the presence of the user in one of these networks. Furthermore, the services provided by each network are not extensible to the other network.

### Solution

The above described problems are solved and a technical advance achieved by the present system for providing interoperability of a proprietary enterprise communication network with a cellular communication network (termed "interoperability system" herein) which serves to pass presence and supervision information relating to a user's wireless station set between a cellular communication network and an enterprise communication network, which typically includes a Private Branch Exchange system. The user is equipped with a wireless station set which is served, when located within the coverage area of the enterprise system, by wireless LAN access technology, such as that defined in t he present 8 02.11 standard, via one or m ore c ell s ites implemented in the premises served by the enterprise communication network. Alternatively, the user's wireless station set can be a combined services device, capable of wire-line and wireless communications, such as a wireless handset which communicates in the enterprise communication network via a base station, which is connected as a wired device to the Private Branch Exchange, and via wireless LAN access technology, when located remote from the base station. The wireless station set is also capable of communicating with the base station subsystems of the existing cellular communication network in a conventional manner when the user is present in the coverage area of the cells of the cellular communication network.

The interoperability system functions to extend the wireless Private Branch Exchange services provided in the enterprise communication network to the cellular communication network based on the presence and supervision data provided by the interoperability system. The provision of ubiquitous service to the user, regardless of their location provides a significant advantage over existing Private Branch Exchange and cellular communication network services. In addition, the u ser is equipped with only o ne wireless station set, w hich can operate as a cordless Private Branch Exchange extension in the office or as a standard wireless station set outside of the office. By thereby provisioning the Private Branch Exchange with this wireless station set mobility allows the user to roam within the wireless coverage area of one of the two networks or to roam between the two networks. This capability also provides telephone coverage personnel with information about the status of a user's wireless station set before they attempt to forward a call or simply call the user's wireless station set.

### Brief Description of the Drawings

Figure 1 illustrates, in block diagram form, the architecture of existing communication networks, including a proprietary enterprise communication network and a cellular communication network;
Figure 2 illustrates, in block diagram form, the architecture of existing communication networks, including a proprietary enterprise communication network and a cellular communication network that are equipped with the present network interoperability system;
Figure 3 illustrates, in flow diagram form, the operation of the present network interoperability system in an existing communication network, including a proprietary enterprise communication network and a cellular communication network; and
Figure 4 illustrates additional details of the network interoperability system.

### Detailed Description

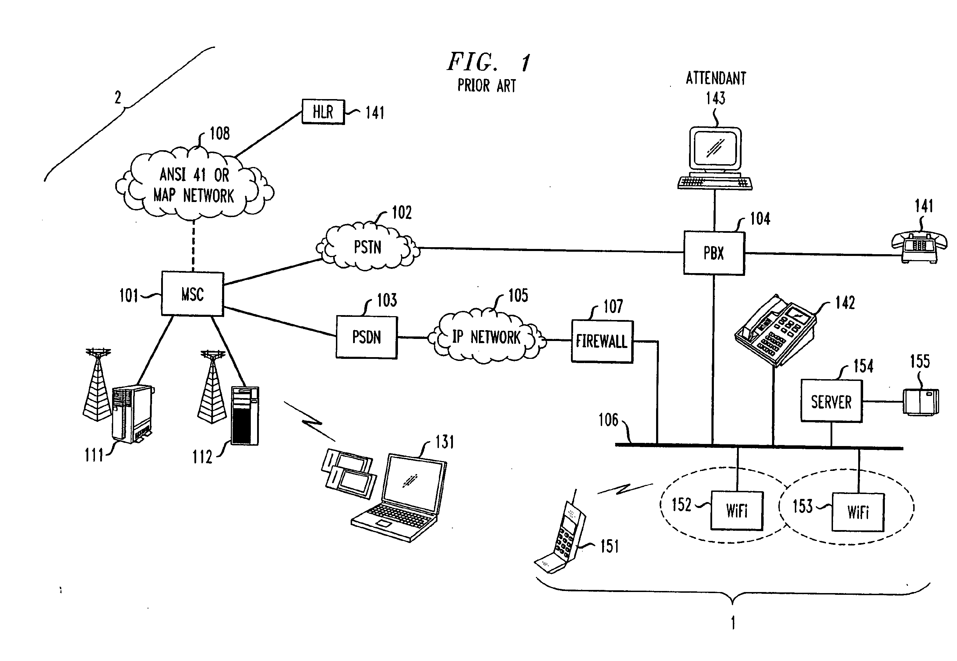

Figure 1 illustrates in block diagram form the architecture of existing communication networks, including a proprietary enterprise communication network and a cellular communication network.

A cellular communication network 2 consists of a plurality of Mobile Switching Centers 101, each of which serves one or more base station subsystems (such as 111, 121) that provide the radio frequency links to the plurality of wireless station sets 131 that are operational in each call coverage area (termed cell) (not shown) provided by the associated base station subsystem. One Mobile Switching Center 101 is typically termed the user's home Mobile Switching Center and it maintains the user's identification, authentication and call services definition data in an associated Home Location Register 141 via an ANSI-41 network 108. Other Mobile Switching Centers (not shown) maintain their own Home Location Registers and Visited Location Registers to store call authorization data for users who roam out of their home service area to the call coverage area of the visited Mobile Switching Centers. The Mobile Switching Center 101 is connected to the Public Switched Telephone Network 102 for voice calls and to the Public Data Switched Network 103 for data calls.

Enterprise communication networks 1 typically consist of proprietary voice and data networks used to serve a predetermined set of users who are typically employed by a single entity. A Private Branch Exchange 104 is typically used to provide voice-based services to the users via various communication devices, such as Plain Old Telephone Sets 141, IP telephones 142, attendant consoles 143, and the like. The associated Wire-line or Wireless Local Area Networks 106 are used for data connectivity to serve wireless station sets, such as 151 via WiFi nodes 152, 153, as well as servers 154 that interconnect back-data storage and/or processing elements 155. Conventional data terminals can also be served by the associated Wire-line or Wireless Local Area Networks 106 either via a direct wired connection to the Wire-line network or via a radio frequency link to Wireless Local Area Networks 106. In this environment, the user is equipped with a dual mode wireless station set 131 that is assigned a single unique telephone number, which is served by the Private Branch Exchange 143. Connections to the Public Switched Telephone Network 102 for voice calls are via the Private Branch Exchange 104, while data connectivity to an IP Network 105 is accomplished via a gateway 107, equipped with a firewall.

### Architecture of the Interoperability System

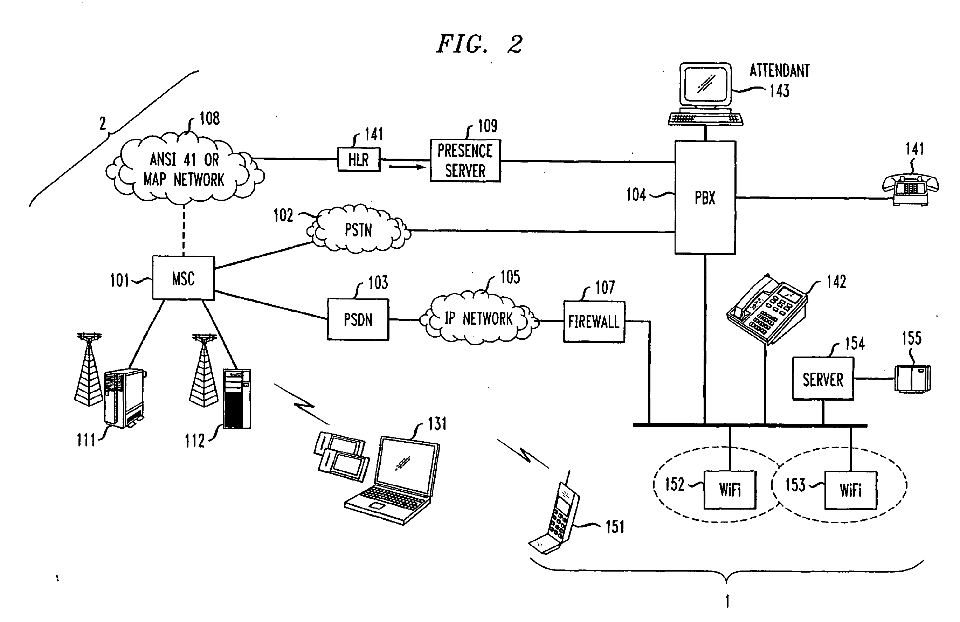

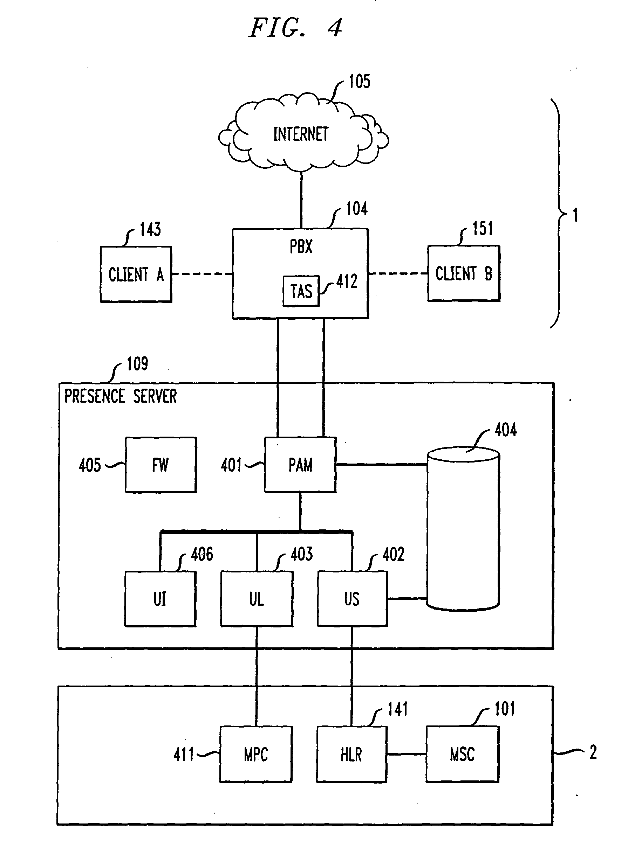

Figure 2 illustrates, in block diagram form, the architecture of existing communication networks, including a proprietary enterprise communication network 1 and a cellular communication network 2 that are equipped with the present network interoperability system. The difference between this network and the existing network of Figure 1 is the use of the Presence Server 109, which is connected to both the Home Location Register 141 of the cellular communication network 2 and an element, typically the Private Branch Exchange 104, of the enterprise communication network 1 and its associated interconnections illustrated in Figure 4, which together comprise the present network interoperability system.

The cellular communication network 2 provides the presence and supervision management for the roaming user's wireless station set 131, or the user wireless station set 131 registers with the Private Branch Exchange 104. Once the user wireless station set 131 is roaming into the cellular communication network 2, the user wireless station set 131 registers with the serving Mobile Switching Center 101 and the user's Home Location Register 141 is updated with the mobile user presence data. The Home Location Register 141 passes the presence and busy/idle status data of the user wireless station set 131 to the Presence Server 109, which communicates with the Private B ranch Exchange 104. The interface between the Private Branch Exchange 104 and the Presence Server 109 is typically an open interface, since the Presence Server 109 typically serves multiple Private Branch Exchange 104 systems. The Private Branch Exchange 104 includes apparatus to interface with the Presence Server 109, such as inquiry software to enable the call controller or attendant functions to generate a n inquiry for transmission to the Presence Server 109 to determine whether the user is presently being served by the cellular communication network 2. The status data maintained in the Presence Server 109 is updated on a periodic or demand basis. The Presence Server 109 is shown as a stand-alone element, but this functionality can alternatively be integrated, in whole or in part, into the enterprise communication network 1 (such as in the Private Branch Exchange 104) or the cellular communication network 2 (such as the Home Location Register 141).

### Implementation of the Network Interoperability System

The concept of presence technology is to enable a user and network elements to know the status and availability of another user to thereby improve communication efficiency. The concept of presence was initially associated with Instant Messaging service, where a user was advised whether a colleague is available to receive messages. The present network interoperability system extends this concept to include monitoring the registration and busy or idle status of any type of user device, including wireless telephones, VolP Clients, traditional POTS telephones, Push to Talk Clients, multimedia clients, etc. Furthermore, the concept of presence has been extended to include Availability, where a user can explicitly share their availability for communicating with colleagues. Typical availability states include: out of the office, in a meeting with a client, in a conference call, on vacation, sick, etc. A user can provide this information, or it can be inferred from the user's on line calendar. Another dimension to presence is Location, which refers to the geographical location of a user's device. Wireless networks can triangulate signal strength measurements to provide the location of wireless handsets and PDAs. More recently, the concept of location is extended to laptop computers, Instant Messaging clients or IP Softphones that might connect to wire-line access networks at work, at home or at remote locations.

By collecting and disseminating the suite of presence information (status of user device, availability of the user, and location of the user), family members, friends and colleagues can select the most effective and appropriate means of communicating with the user. For example, network applications (e.g. Find Me - Follow Me Service) can use presence information to more efficiently and appropriately route or block incoming communication requests. A call to an office wire-line phone can be forwarded to a wireless phone only if the wireless phone is active and idle and the user's availability indicates that they are not in a meeting.

As shown in Figure 4, the Presence Server 109 includes a plurality of elements, which include:
- FM - Framework 405
- PAM - Presence and Availability Management 401
- US - User Status 402
- UL - User Location 403
- Ul - User Identification 406
These various elements perform the basic interoperability functions including:
- Collection of network presence information
- Storage of presence information both explicit and implicit
- Handling implicit network terminal status updates
- Maintenance of the user's presence policy
- Authorization and authentication.

The Presence Server 109 is connected via the UL - User Location 403 to the Mobile Presence Client 411 located in the cellular communication network 2, in order to receive data regarding the present location of the user in the cellular communication network 2. In addition, the Presence Server 109 is connected via the US - User Status 402 to the Home Location Register 141 in the cellular communication network 2 to obtain the present busy/idle status of the user's wireless station set 131 as determined by the Mobile Switching Center 101. In addition, the UI - User Identification 406 element functions to validate the identity of a user when an inquiry or status/location update is received. The Presence and Availability Management 401 element performs the information management, retrieval, and delivery functions by coordinating the operation of the above-noted components of the Presence Server 109 with components, such as the Telephone Access Server 412, resident in the Private Branch Exchange 104, which serves to provide location and status information to the Presence Server 109 for the user's wireless station set when it is served by the Private Branch Exchange 104. The database of user information is maintained in memory 404 and Framework 405 represents the Presence Server administration component, responsible for the registration of the various systems and applications that interconnect with the Presence Server 109.

### Examples of Presence Enabled Services

Presence enabled services fall into two major categories: Information Sharing and Service Enabling.

Information Sharing - Providing basic presence information directly to users allows the user to determine the most appropriate means of contacting another user. For example, a user may have multiple presence clients, such as a wireless telephone, a VolP telephone, a Softclient, an Instant Messaging client, etc. By knowing the presence and location of the user allows another user (calling party) to determine the appropriate means to contact the user given the nature of the communication and the status of the user. This capability is especially useful for an administrative assistant or receptionist who is trying to determine the best way to contact an employee. For example, today if an administrative assistant or receptionist picks up an unanswered call from an important customer, they might attempt to forward the call to the employee's wireless phone. However they do not know if the employee is in the building or visiting another customer. They do not know if the wireless phone is active or if it is busy or idle. Consequently, they may forward the call only to have the customer sent to a wireless voice mailbox. Worse yet, they may forward the call to an employee in the midst of a meeting with another customer. By knowing the location of the employee, the status of wireless phone and the employee's availability, the administrative assistant or receptionist can make more appropriate decisions on how to handle the incoming customer call. For example, if the employee is busy or not available, the receptionist could offer to take a message or locate another person to answer the customer's question. If the administrative assistant or receptionist can determine that the wireless phone is not available but the employee's instant messaging client is active, the administrative assistant or receptionist can send an instant message that alerts the employee of the awaiting call.

Service Enabling - Presence information allows service providers to automatically re-route high priority incoming communication sessions. A few specific service examples include: Presence Enabled Find Me / Follow Me Service. With today's Find Me / Follow Me service, when calls arrive at a users business telephone but there is no answer, t he c all is forwarded to the user's wireless telephone. If the user's wireless telephone is not registered or busy, the call is forwarded to the user's wireless voice mailbox. This can be confusing for the calling party. They may hear a variety of audible ring tones and may experience significant delay reaching the voice mailbox. Subscribers to existing Find Me / Follow Me services have multiple voice mailboxes and in some cases incur additional wireless usage charges. With a Presence Enabled Find Me /Follow Me service, the Find Me / Follow Me application server queries the presence status of the subscriber's wireless telephone before forwarding the call. If the subscribers wireless telephone is not available, the call can be directly sent to voice mail or forwarded to another call coverage point.

Presence Enabled Call Pick Up - Wire-line Call Pick Up service allows multiple employees to answer each others telephones. Typically, the employees are located in the same office and can hear alerting tones generated by the wire-line telephones. If an employee wants to pickup a call ringing at another employee's desk, the employee picks up their telephone and dials a special code. This causes the ringing call to be forwarded to the employee's telephone. The key to this arrangement is that the employees are able to hear each others telephones ring. With Presence based Call Pick Up, the presence of a waiting call for one employee triggers notification to all the members of the Pick Up Group. The waiting call notification can be delivered via distinctive ringing patterns, special call waiting tones or instant messages. With Presence Based Call Pick Up, the members of the Call Pick Up Group no longer need to be colocated or even served by the same call control or switching system. Members of the Call Pick Up Group can include remote workers and even wireless telephones.

Presence Enabled Call Distribution - Existing Call Distribution systems take incoming calls and distribute them to available agents. Typically, calls are distributed to the agent that has been idle the longest. The key to the efficient operation of the call distribution system knows the busy or idle status of the agents. This is presently done by having all of the agent telephones served by a single switching system or PBX. With Presence Enabled Call Distribution, a centralized call distribution system subscribes to the presence and availability status of the agents across multiple switching systems and PBXs. Consequently, agents can be geographically distributed and served by multiple switching system or PBXs or they can be served by a combination of PBXs and switching systems. This includes agents served by wireless switching systems.

Presence Enable Conferencing- Today it is difficult to know who has joined a conference bridge and who is speaking. With presence enabled conferencing, existing conference services can be augmented to provide participants on a conference call the presence information of the other participants. Thus, the conference call organizer and the other participants know if all of the participants have connected to the bridge. In addition the conference bridge can be augmented to identify the identity of the current speaker.

Location Information Delivered with Call - Today, customers place calls to agents or automated Interactive Voice Response (IVR) system in order to receive information. in many situations, it would simplify the interaction if the agent or IVR system knew the location of the calling party. For example, if a customer calls a hotel for driving instructions, the hotel could receive an instant message that identifies the customer's present location. If a customers calls into an IVR system to retrieve flight schedules or restaurant information, the IVR system could use the customer's current location to tailor the information delivered (e.g. providing flights times for the current city).

### Operation of the Interoperability System

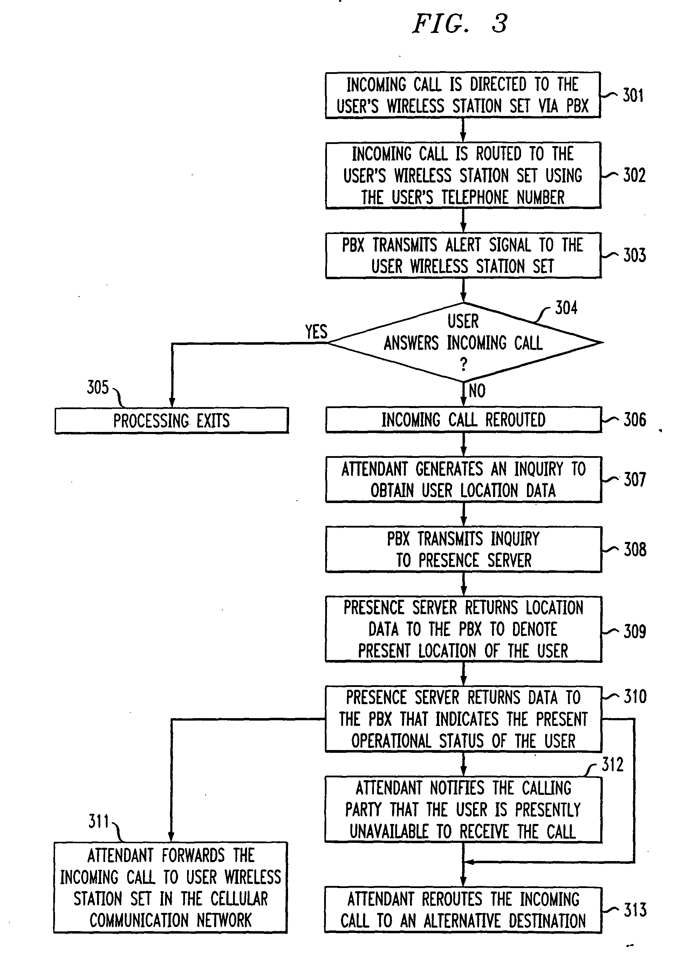

Figure 3 illustrates, in flow diagram form, the operation of the present network interoperability system in an existing communication network, including a proprietary enterprise communication network and a cellular communication network.

As an example of the operation of the interoperability system, the presence and supervision information is used to enhance the services provided to the user and extend the services provided by the Private Branch Exchange 104 to the user while roaming in the cellular communication network. For example, at step 301, an incoming call from a calling party, directed to the user's wireless station set 131, is routed through the Public Switched Telephone Network 102 to the Private Branch Exchange 104 and thence at step 302 to the user's wireless station set 131, using the user's telephone number, if the calling party is located outside of the Private Branch Exchange 104, and by the Private Branch Exchange 104 directly at step 302 to the user's wireless station set 131 if the calling party is located within the coverage area of the enterprise communication network. The Private Branch Exchange 104, in response to the receipt of the incoming call, transmits an alert signal to the user wireless station set 131 at step 303 at which time the user either answers the incoming call at step 304 and processing exits at step 305 or the user fails to answer the incoming call at step 304 due to one of many conditions, such as: busy do not answer, call forward to the operator, no answer, and the like. If the incoming call if not answered per step 304, the incoming call is rerouted at step 306, pursuant to the features activated by the user, to a destination, such as to the attendant 143 of the Private Branch Exchange 104. At step 307, the attendant determines the present location of the user by generating an inquiry which is used by the Private Branch Exchange 104 to obtain user location data from the Presence Server 109 at step 308. In this case, it is assumed that the user is roaming in the cellular communication network. If it is determined from the Presence Server 109 that the user is roaming in the cellular communication network, the Presence Server 109 returns location data at step 309 to denote the present location of the user in the cellular communication network. In addition to the location data that identifies the present or last known location of the user's wireless station set, the Presence Server 109 can optionally at step 310 return data to the Private Branch Exchange 104 that indicates the present operational status of the user. In response to the returned data, the attendant at step 311 can forward the incoming c all from the calling p arty t o the user wireless station s et 1 31 in t he cellular communication network. Alternatively, the attendant may notify the calling party at step 312 that the user is presently unavailable to receive the call due to the users wireless station set 131 being in a busy state or not registered in the cellular communication network. At step 313, the attendant may reroute the incoming call to an alternative destination.

In addition, other value added services can use the user location and busy/idle status obtained from the Presence Server 109 to redirect the call to the user regardless of the location of the user. Summary

The interoperability system serves to pass presence and supervision information relating to a user's wireless station set between a cellular communication network and an enterprise communication network, which typically includes a Private Branch Exchange system, to provide consistency of the service provides to the user, regardless of location.

## Claims

1. An interoperability system connected to an enterprise communication network and a public communication network for providing communication services to users' wireless station sets which are located in the coverage area of a one of said enterprise communication network and said public communication network, comprising:
presence server means for storing user data representative a service status of a user wireless station set, comprising:
location means for identifying a last determined location of said plurality of users; and
query means for exchanging said user data with at least one of said enterprise communication network and said public communication network.

2. The interoperability system of claim 1 wherein said enterprise communication network and said public communication network each comprise at least one cell site, said location means comprises:
location data update means, responsive to user location data received from a one of said enterprise communication network and said public communication network, for recording present location data identifying a one of said at least one cell site which presently serves said user wireless station set.

3. The interoperability system of claim 1 wherein said presence server means further comprises:
status means for identifying a present operational status of said user wireless station set.

4. The interoperability system of claim 3 w herein said status means comprises:
status update means, responsive to user operational status data received from a one of said enterprise communication network and said public communication network, for recording present operational status data of said user wireless station set.

5. A method of providing service interoperability in both an enterprise communication network and a public communication network for providing communication services to users' wireless station sets which are located in the coverage area of a one of said enterprise communication network and said public communication network, comprising:
storing user data representative a service status of a user wireless station set, comprising:
identifying a last determined location of said user wireless station set; and
exchanging said user data with at least one of said enterprise communication network and said public communication network.

6. The method of providing service interoperability of claim 5 wherein said enterprise communication network and said public communication network each comprise at least one cell site, said step of identifying comprises:
recording, in response to user location data received from a one of said enterprise communication network and said public communication network, present location data identifying a one of said at least one cell site which presently serves said user wireless station set.

7. The method of providing service interoperability of claim 5 wherein said step of storing further comprises:
identifying a present operational status of said user wireless station set.

8. The method of providing service interoperability of claim 7 wherein said step of identifying a present operational status comprises:
recording, in response to user operational status data received from a one of said enterprise communication network and said public communication network, for recording present operational status data of said user wireless station set.
